Europäisches Patentamt

European Patent Office

Office européen des brevets

(19)

(11) Publication number: 0 297 841 B1

# EUROPEAN PATENT SPECIFICATION

(45) Date of publication of patent specification: 22.09.93     (51) Int. Cl.5: G02B 27/28, G02B 5/30, G02F 1/133

(21) Application number: 88305892.7

(22) Date of filing: 29.06.88

(54) Polymeric films effective as optical phase retarders and polarising assemblies.

(30) Priority: 30.06.87 JP 164801/87
21.07.87 JP 182849/87
24.09.87 JP 241979/87
02.11.87 JP 278080/87
28.06.88 JP 162114/88

(43) Date of publication of application:
04.01.89 Bulletin 89/01

(45) Publication of the grant of the patent:
22.09.93 Bulletin 93/38

(84) Designated Contracting States:
CH DE FR GB IT LI NL

(56) References cited:
EP-A- 0 167 628
EP-A- 0 277 804
DE-A- 3 129 162
DE-A- 3 334 181

PATENT ABSTRACTS OF JAPAN, vol. 10, no.
132 (P-456)[2189], 16th May 1986; & JP-A-60
254 002

(73) Proprietor: SUMITOMO CHEMICAL COMPANY,
LIMITED
Kitahama 4-chome 5-33
Chuo-ku Osaka 541(JP)

(72) Inventor: Nakamura, Kimishige
3-13-801, Mizuo
Ibaraki-shi Osaka(JP)
Inventor: Okada, Toyokazu
45-B-106, Yamadaminami
Suita-shi Osaka(JP)
Inventor: Sakakura, Kazuaki
2-20, Takase-cho
Moriguchi-shi Osaka(JP)
Inventor: Higashi, Koji
1-9-1-510, Tamagawa
Takatsuki-shi Osaka(JP)
Inventor: Kikui, Hitoshi
2-1, Kuwata-cho
Ibaraki-shi Osaka(JP)
Inventor: Ichinose, Keizo
1-2-40, Hirata
Ibaraki-shi Osaka(JP)

(74) Representative: Diamond, Bryan Clive et al
Gee & Co., Chancery House, Chancery Lane
London WC2A 1OU (GB)

EP 0 297 841 B1

EP 0 297 841 B1

**Description**

This invention relates to a novel phase retarder, and a polarizing sheet and a liquid crystal display using the same.

A phase retarder is a film or sheet showing birefringence. Since a phase retarder has different refractive indices in two directions crossing at right angles to each other, light transmittance by the phase retarder produces light rays whose planes of polarization make a phase difference.

Phase retarders which are currently available on the market and have been in practical use include a so-called $\lambda/4$ retarder or quarter retarder having a function to cause incident light having a wavelength of $\lambda$ to produce a retardation value of $\lambda/4$. The quarter retarder is prepared by uniaxially stretching a cellulose acetate-based film. The quarter retarder serves as a circular polarizer when it is combined with a linear polarizer in such a manner that the optic axis thereof makes an angle of 45° with respect to the axis of polarization of the linear polarizer. A linear polarizer is also utilized as anti-glare materials, for example, a VDT (visual display terminal) filter, making use of its function to cut reflected light.

In liquid crystal display systems, it has been proposed to improve image quality of TN (twisted nematic) type liquid crystal displays, in which nematic liquid crystal molecules have a twisted angle of 90° and a liquid crystal cell is sandwitched by a pair of polarizing sheets with their planes of polarization crossing or being parallel, by interposing a phase retarder between one of the polarizing sheets and the liquid crystal cell, as disclosed in Japanese Patent Application (OPI) Nos. 186937/86 and 26322/85 (the term "OPI" as used herein means "unexamined published Japanese patent application").

To cope with the demands for an increased display capacity and an enlarged display screen, generally called STN (super twisted nematic) type liquid crystal displays have recently been developed, in which the nematic liquid crystal molecules are twisted at an angle of about 180 to 270°. However, the STN type liquid crystal display suffers from coloring ascribed to birefringence of liquid crystal molecules, resulting in the failure of B/W display. In order to solve this problem, it has been suggested that a liquid crystal cell for color removal is added to the STN type liquid crystal cell as an optical compensator to thereby eliminate the color and to enable B/W display, as described, e.g., in the October issue of Nikkei Micro Device, 84 (1987). It would be possible, in principle, to use a phase retarder in place of the above-described liquid crystal cell for color removal.

Conventional quarter retarders, however, do not serve for the new uses including these liquid crystal display systems for the reasons that 1) the retardation value (hereinafter defined) does not meet the requirements, 2) the optic axis thereof is not fixed, and 3) they suffer considerable optical color unevenness. Therefore, there is a great need to develop a phase retarder having a fixed optic axis, freedom from optical color unevenness and a retardation value between 200 nm and 1000 nm, which would be promising for application to the above-described new optical uses including liquid crystal displays but none of the state-of-the-art phase retarders satisfies these requirements.

EP-A-0277804, which was published on 10th August 1988 but claims priorities of 2nd February and 20th April 1987, discloses a retarder obtained by uniaxially stretching a polycarbonate polymer to have a retardation value in the range of 200 to 625 nm, a neck-in ratio after uniaxial stretching of not more than 10%; and an optical color difference measured between crossed Nicol prisms (polarisers) with their axis at 45 degrees of not more than 20; this is used as a $\frac{1}{2}$ phase or full retarder, e.g. in a liquid crystal.

JP-A-60-254002 discloses plastic film, e.g. a polyester or polyamide, obtained by stretching by 0.1 to 30% in the direction 45% to the polarizing axis and having a retardation value of 100-200 nm and which has good retardation and is used as a circular polarizer.

One object of this invention is to provide a phase retarder having a retardation value in the range of from 200 to 1000 nm, a fixed optical axis, and substantial freedom from optical color unevenness.

This invention relates to a polymeric film useful as an optical phase retarder according to the present claim 1.

This invention further relates to a polarizing sheet composed of the above-described phase retarder and a linear polarizer.

The present invention furthermore relates to a liquid crystal display comprising a liquid crystal cell sandwiched between a pair of polarizing sheets, wherein the above-described phase retarder is provided between the liquid crystal cell and one of the polarizing sheets.

The terminology "retardation value" as used herein means a product of the thickness (d) of a film or sheet and the birefringence ($\Delta n$) of the film or sheet (hereinafter referred to as the R value).

The film or sheet to be used in the present invention as a phase retarder can be prepared from any kind of thermoplastic resin irrespective of whether it is crystalline or amorphous as long as the uniaxially stretched film obtained therefrom has an average transmittance of at least 50% and preferably at least 80%

2

in the visible wavelength region. To give transparency and a proper R value, amorphous resins are preferred. Examples of these resins include poly(meth)acrylate resins, such as polymethyl methacrylate and methyl methacrylate copolymers comprising methyl methacrylate as a main component and other ethylenic comonomers; polystyrene resins, such as polystyrene and styrene copolymers comprising styrene as a main component and other ethylenic comonomers; polyacrylonitrile resins, such as polyacrylonitrile and acrylonitrile copolymers; polyester resins, such as polyethylene terephthalate and polyester copolymers; polyamide resins, such as 6 nylon and 66 nylon; polyvinyl chloride resins, such as polyvinyl chloride and vinyl chloride copolymers; polyvinyl alcohol and derivatives thereof; polyolefin resins, such as polyethylene, polypropylene, ethylene copolymers, and propylene copolymers; polysulfones; polyether sulfones; polycarbonates; fluorine-containing resins; modified resins thereof; and resin compositions prepared by blending the aforesaid resins with transparent low-molecular weight organic compounds or transparent inorganic compounds. These resins may be used either individually or in combinations thereof. Preferred among them are polyester resins, e.g., polyethylene terephthalate and polyester copolymers; polysulfones; polyvinyl chloride resins, e.g., polyvinyl chloride and vinyl chloride copolymers; and polyacrylonitrile resins, e.g., polyacrylonitrile and acrylonitrile copolymers.

In order to improve the image quality of liquid crystal displays, the phase retarder to be used therein is prepared from a thermoplastic resin having the aforesaid spectral $\alpha$-value of 1.00 or more and preferably 1.03 or more.

When a phase retarder is used in an STN type liquid crystal display, the $\alpha$-value dependence of the image quality is explained below.

When a retarder is set between parallel polarizers in such a manner that the optic axis thereof makes an angle of 45° with respect to the axes of polarization of the polarizers, the transmittance (T) of the optical system is obtained by equation (2):

$$T = T_r \times T_p \times \cos^2 \frac{\pi R_r}{\lambda} \qquad (2)$$

wherein $R_r$ represents the R value (nm) of the retarder; $\lambda$ represents the light wavelength (nm); and $T_r$ and $T_p$ represent the transmittances of the retarder and of the parallel polarizers, respectively.

An STN type liquid crystal display composed of a liquid crystal cell containing liquid crystals having a twisted angle of about 200° and an R value [a product of a birefringence ($\Delta$n) and a thickness (d)] of about 850 nm, which is sandwiched between parallel polarizers, with a phase retarder having an $R_r$ value of about 550 nm being provided between the upper polarizing sheet and the liquid crystal cell in such a manner that the optic axis thereof makes an angle of about 45° with respect to the axes of polarization of the parallel polarizers, has improved image quality, i.e., it is substantially free from coloring.

Image quality can be judged more excellent as the color of background in the display has a more distinct white color.

Such quality can be attained by satisfying a condition for constant transmittance in the visible wavelength region, i.e., a condition for attaining T = constant in equation (2). Such condition can be represented by equation (3):

$$\frac{\pi R_c}{\lambda} = 0 \qquad (3)$$

Accordingly, the $R_c$ value of the birefringent body (a combination of the liquid crystal cell and the phase retarder in this particular case) should satisfy. equation (4):

$$R_c = 0 \qquad (4)$$

Therefore, a perfect white background in the display can be made, exhibiting satisfactory image quality, if the R value of liquid crystal cell is compensated by $R_r$ of the retarder as represented by equation (4) and T is constant throughout the visible wavelength region.

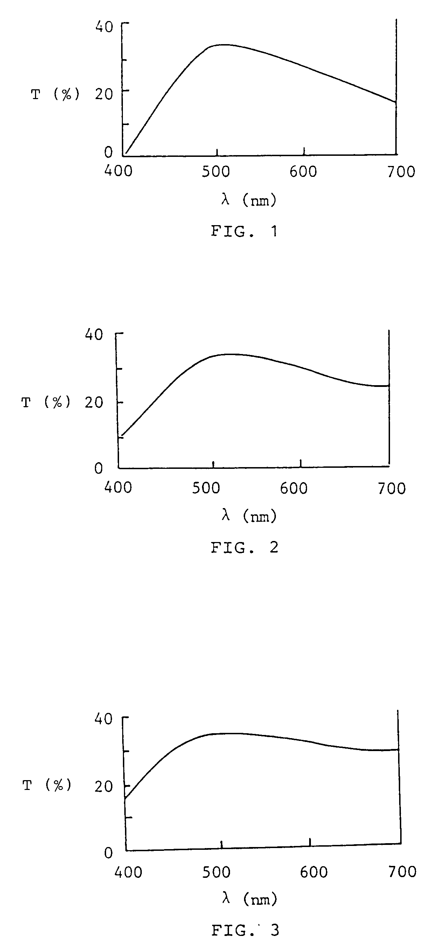

Figures 1, 2 and 3 of the drawings are transmittance light spectra of background of the STN type liquid crystal display wherein the phase retarder has an $\alpha$-value of 1.00, 1.03, or 1.06 respectively. As can be

3

seen from these figures, the larger the $\alpha$-value, the lesser the coloring, approaching to a perfect white display.

As explained above, the $\alpha$-value of a phase retarder to be used in a liquid crystal display is 1.00 or more and preferably 1.03 or more, to thereby attain satisfactory image quality.

Preferred examples of thermoplastic resins having an $\alpha$-value of 1.03 or more are resins containing an aromatic ring in the main chain thereof, such as polysulfones, polyether sulfones, polyetherether ketones, polyesters, polyarylates, polystyrenes, and polycarbonates, and resins containing a polar functional group in the sequential unit thereof, such as polyvinyl chloride, fluorine-containing polymers and polyacrylonitrile.

The phase retarder according to the present invention can be obtained by molding the above-described thermoplastic resins into a film or sheet by known techniques, such as solvent casting, calendering or extrusion, and uniaxially stretching the film or sheet to an appropriate degree.

For the purpose of obtaining a phase retarder having a fixed optical axis and being substantially free from optical color unevenness, the film or sheet to be stretched is required to have satisfactory thickness precision and optical uniformity. Formation of die lines, etc. during molding is unfavorable. Since films or sheets generally undergo minute orientation during molding, it is desirable to diminish such minute orientation prior to stretching. The minute orientation can effectively be reduced by subjecting the film or sheet to heat treatment at a temperature in the vicinity of the heat distortion temperature of the film or sheet prior to stretching. By effecting such heat treatment, the birefringence ($\Delta n$) of the film or sheet becomes virtually zero, which indicates substantial freedom from orientation.

The uniaxial stretching of the film or sheet can be carried out by conventional methods, such as transverse uniaxial stretching by tentering, compression stretching by rolling, and longitudinal uniaxial stretching between rolls having different peripheral speeds.

In order to obtain a phase retarder free from optical color unevenness and narrow fluctuations of retardation, the neck-in ratio, (A-B)/A, wherein A is a film width before stretching and B is a film width after stretching, should be controlled not to exceed 13%, preferably not to exceed 5%, more preferably be reduced virtually to zero. In this connection, the most effective stretching method is the transverse uniaxial stretching method by tentering that does not cause substantial neck-in.

The transverse uniaxial stretching by tentering generally comprises three steps of preheating, stretching and heat set. The preheating plays the same role as the above-described heat treatment for reducing the birefringence of the film or sheet to substantially zero. The stretching is the most important for transforming the film or sheet to a phase retarder. Conditions of stretching should be varied depending on the kind of the thermoplastic resin to be used, thickness of the film or sheet, desired $R_r$ value, and the like. The heat set after stretching is effective to improve dimensional stability and retardation evenness of the phase retarder.

The terminology "average transmittance in the visible wavelength region" as used herein means an average value calculated from 31 transmittance values measured at every 10 nm within a wavelength region of from 400 to 700 nm by the use of a spectrophotometer or spectrometer. In order to assure suitability for optical application, the average transmittance of the phase retarder of the present invention is preferably as high as possible and should be at least 50%, preferably at least 80%, and more preferably at least 85%.

The terminology "optical color unevenness" used herein can be expressed quantitatively by $\Delta E^*$ as hereinafter defined. With the phase retarder being set between crossed polarizers in such a manner that the optic axis thereof makes an angle of 45° with respect to the axes of polarization of the polarizers, $L^*$, $a^*$, and $b^*$ of the phase retarder are determined with the transmittance spectrum measured by a spectrophotometer or spectrometer using parallel polarizers as a reference material in accordance with JIS Z 8729 (Specification of Colour of Materials according to the CIE 1976 ($L^*a^*b^*$) Space and the CIE 1976 ($L^*u^*v^*$) Space). The determination is made on n samples from different locations of the film or sheet, and $(\Delta E^*)i,j$ is calculated from the determined values, $L^*$, $a^*$, and $b^*$ according to the Cube-Root equation (see the Handbook of Optics, Walter G. Driscoll, Editor, McGraw-Hill Book Co., 1978; pages 9-30, 9-31):

$$(\Delta E^*)i,j = [((\Delta L^*)i,j)^2 + ((\Delta a^*)i,j)^2 + ((\Delta b^*)i,j)^2]^{\frac{1}{2}}$$

wherein
$(\Delta L^*)i,j = (L^*)i - (L^*)j;$
$(\Delta a^*)i,j = (a^*)i - (a^*)j;$
$(\Delta b^*)i,j = (b^*)i - (b^*)j;$
$i = 1$ to n;
$j = 1$ to n; and
$i \neq j.$

The highest of the calculated $(\Delta E^*)_{i,j}$ values is taken as $\Delta E^*$. The more the number of measurement (n), the higher the precision of the result. Usually, the measurement is carried out on ten random locations of a sheet or film (30 cm length × 30 cm width) to determine $\Delta E^*$. If a phase retarder has $\Delta E^*$ exceeding 30, color unevenness and a rainbow pattern would be visually observed under crossed polarizers. Such a film can never be used as an optical film.

The thus obtained phase retarder can be applied to novel uses, such as polarizing sheets, liquid crystal displays, optical filters, and the like.

The liquid crystal display according to the present invention comprises a liquid crystal cell sandwiched between a pair of polarizing sheets, wherein the phase retarder according to the present invention is interposed between one of the polarizing sheets and the liquid crystal cell.

The liquid crystal display systems in which the phase retarder of the present invention can be used includes a TN type liquid crystal display using liquid crystal molecules having a twisted angle of 90° and an STN type liquid crystal display using liquid crystal molecules having a twisted angle of from 180 to 270°. Inter alia, the STN type liquid crystal display using the phase retarder of the present invention exhibits markedly improved image quality as compared with the conventional STN type liquid crystal displays.

In applying the phase retarder of the present invention to liquid crystal displays, it is necessary to set its R value to the optimum in accordance with the twisted angle and the birefringence ($\Delta n$) of liquid crystal molecules and the thickness (d) of the liquid crystal cell.

The image quality can be best conditioned by setting the phase retarder of the invention and the polarizing sheets in such a manner that the optic axis makes an angle of from 30 to 60° and preferably from 40 to 50° with respect to the axes of polarization of the polarizers. Further, the image quality can also be best conditioned by arranging the pair of polarizing sheets in such a manner that their axes of polarization may cross or nearly cross or be parallel or nearly parallel to each other.

The present invention is now illustrated in greater detail with reference to Examples in view of Comparative Examples, but it should be understood that the present invention is not limited thereto. In these examples, R values were measured by using a polarizing microscope with a Senarmont compensator at 546 nm. $\Delta E^*$ values were determined by the use of a spectrophotometer and calculated according to the above-described equation. Transmittance spectra were measured by means of a spectrophotometer or a spectrometer and averaged in accordance with the above-described method.

$\alpha$-values of phase retarders as defined by equation (1) were obtained by the use of an Abbe's refractometer in accordance with the following calculations (I) to (IV).

(I) A refractive index in the direction of the optic axis ($n_{D1}$) and a refractive index in the direction perpendicular to the optic axis ($n_{D2}$) were measured using D-line of sodium (589.3 nm) and assigned to equation (5) shown below to calculate an R value at 589.3 nm ($R_D$).

$$R_{D1} = |n_{D1} - n_{D2}| \times d \qquad (5)$$

wherein d represents a thickness (nm) of a phase retarder.

(II) An apparent refractive index in the direction of the optical axis ($N_{F1}$) and that in the direction perpendicular to the optic axis ($N_{F2}$) were measured by using F-line (486.1 nm) and assigned to equations (6) and (7) shown below, respectively, to obtain actual refractive indices ($n_{F1}$) and ($n_{F2}$).

$$n_{F1} = P \times \sin[63° - \sin^{-1}\{\frac{1.74}{P} \times \sin\{63° - \sin^{-1}(\frac{N_{F1}}{1.74})\}\}] \qquad (6)$$

$$n_{F2} = P \times \sin[63° - \sin^{-1}\{\frac{1.74}{P} \times \sin\{63° - \sin^{-1}(\frac{N_{F2}}{1.74})\}\}] \qquad (7)$$

wherein P represents a refractive index of a main prism of the refractometer at 486.1 nm, measuring 1.7589. (III) The $n_{F1}$ and $n_{F2}$ values thus obtained are assigned to equation (8) shown below to obtain an R value at 486.1 nm ($R_F$).

$$R_F = |n_{F1} - n_{F2}| \times d \qquad (8)$$

wherein d is as defined above.

(IV) The $\alpha$-value can be calculated from the $R_F$ and $R_D$ values according to equations (1).

## EXAMPLE 1

An about 200 $\mu$m thick and 300 mm wide polyethylene terephthalate film was preheated at about 210°C and then subjected to transverse uniaxial stretching by tentering at about 195°C to obtain a stretched film having a thickness of about 140 $\mu$m and a width of 430 mm.

The resulting phase retarder was found to have an average transmittance of about 90%, an R value of about 915 nm, a $\Delta E^*$ of 12.8 and an $\alpha$-value of about 1.05 with uniform quality and was substantially free from optical color unevenness.

## EXAMPLE 2

An about 400 $\mu$m thick and 300 mm wide polyester copolymer film ("PETG 6763" produced by Eastman Chemical Co., Ltd.) was preheated at about 135°C and then subjected to transverse uniaxial stretching by tentering at about 120°C to obtain a stretched film having a thickness of about 250 $\mu$m and a width of 480 mm.

The resulting phase retarder was found to have an average transmittance of about 89%, an R value of about 535 nm, a $\Delta E^*$ of 11.0 and an $\alpha$-value of about 1.06 with uniform quality, and be substantially free from optical color unevenness.

## EXAMPLE 3

An about 250 $\mu$m thick and 300 mm wide polyvinyl chloride film ("SUNLOID VIP CHA 150" produced by Tsutsunaka Plastic Industry Co., Ltd.) was preheated at about 110°C and then subjected to transverse uniaxial stretching by tentering at about 100°C to obtain a stretched film having a thickness of about 140 $\mu$m and a width of 540 mm.

The resulting phase retarder was found to have an average transmittance of about 87%, an R value of about 300 nm, a $\Delta E^*$ of 8.0 and an $\alpha$-value of about 1.02 with uniform quality, and be substantially free from optical color unevenness.

## EXAMPLE 4

An about 150 $\mu$m thick and 300 mm wide polysulfone film ("SUMILITE FS-1200" produced by Sumitomo Bakelite Co., Ltd.) was preheated at about 230°C and then subjected to transverse uniaxial stretching by tentering at about 210°C to obtain a stretched film having a thickness of about 75 $\mu$m and a width of 600 mm.

The resulting phase retarder was found to have an average transmittance of about 89%, an R value of about 590 nm, a $\Delta E^*$ of 9.5 and an $\alpha$-value of about 1.10 with uniform quality, and be substantially free from optical color unevenness.

## EXAMPLE 5

An about 220 $\mu$m thick and 300 mm wide extruded polymethyl methacrylate film ("SUMIPEX-MMO" produced by Sumitomo Chemical Co., Ltd.) was preheated at about 90°C and then subjected to transverse uniaxial stretching by tentering at about 80°C to obtain a stretched film having a thickness of about 150 $\mu$m and a width of 440 mm.

The resulting phase retarder had an average transmittance of about 90%, an R value of about 570 nm, a $\Delta E^*$ of 7.2 and an $\alpha$-value of about 1.01 with uniform quality and be substantially free from optical color unevenness.

EXAMPLE 6

A 60 $\mu$m thick low-density polyethylene film ("SUMIKATHENE F-208-1" produced by Sumitomo Chemical Co., Ltd.) was subjected to compression stretching by rolling at a roll surface temperature of about 100°C under a linear pressure of 250 kg/cm to obtain a stretched film having a thickness of about 15 $\mu$m (neck-in ratio: about 3%).

The resulting phase retarder had an average transmittance of about 86%, an R value of about 630 nm, a $\Delta E^*$ of 14.4 and an $\alpha$-value of about 1.00 with uniform quality and was substantially free from optical color unevenness.

EXAMPLE 7

The same polysulfone film as used in Example 4 was preheated at 215°C and then subjected to longitudinal uniaxial stretching between rolls having different peripheral speeds to obtain a stretched film having a thickness of about 70 $\mu$m (neck-in ratio: about 6%).

The resulting phase retarder had an average transmittance of about 88%, an R value of about 560 nm, a $\Delta E^*$ of 15.0 with uniform quality and be substantially free from optical color unevenness.

EXAMPLE 8

A 75 $\mu$m thick polyvinyl alcohol film ("Kuraray Vinylon VF-9P75R" produced by Kuraray Co., Ltd.) was stretched by rolling at a roll surface temperature of about 130°C under a linear pressure of 200 kg/cm to obtain a stretched film having a thickness of about 16 $\mu$m (neck-in ratio: about 13%).

The resulting stretched film, with its both ends being fixed, was dipped in a 7.5 wt%, aqueous solution of boric acid at 65°C for 3 minutes, followed by drying.

Cellulose triacetate films having a thickness of 80 $\mu$m ("Fujitack" produced by Fuji Photo Film Co., Ltd.) were laminated on both sides of the stretched film by using a urethane adhesive to obtain a phase retarder.

The resulting phase retarder had a transmittance of about 90%, an R value of about 565 nm, a $\Delta E^*$ of 9.4, and an $\alpha$-value of about 1.01 with uniform quality and was substantially free from optical color unevenness.

EXAMPLE 9

An about 300 $\mu$m thick and 300 mm wide polycarbonate film (average molecular weight: about 26,000) was preheated at about 185°C and then subjected to transverse uniaxial stretching by tentering at about 175°C to obtain a stretched film having a thickness of about 160 $\mu$m and a width of 560 mm.

The resulting phase retarder was found to have an average transmittance of about 91%, an R value of about 885 nm, a $\Delta E^*$ of 9.3, and an $\alpha$-value of about 1.06 with uniform quality and was substantially free from optical color unevenness.

EXAMPLE 10

An about 200 $\mu$m thick and 300 mm wide polycarbonate film (average molecular weight: about 26,000) was preheated at about 190°C and subjected to transverse uniaxial stretching by tentering at about 175°C, followed by heating at about 180°C for 2 minutes.

The resulting phase retarder was found to have an average transmittance of about 91%, an R value of about 60 nm, a $\Delta E^*$ of 13.1, and an $\alpha$-value of about 1.06 with uniform quality and was substantially free from optical color unevenness.

EXAMPLES 11 to 19

Each of the phase retarders obtained in Examples 1 to 9 was interposed between a liquid crystal cell and an upper polarizing sheet of a liquid crystal display by the use of an adhesive. The liquid crystal molecules in the cell had a twisted angle of about 200° and a retardation value ($\Delta n \times d$) of about 850 nm. The resulting display could make a B/W display comprising a black image on a white background with satisfactory image quality, suffering from neither appearance of a rainbow pattern nor color unevenness.

COMPARATIVE EXAMPLE 1

The same procedure of Example 7 was repeated, except that the distance between rolls was extended, to obtain a stretched film having a thickness of about 80μm (neck-in ratio: about 30%).

The resulting phase retarder had an average transmittance of about 88% and an R value of about 560 nm but was observed to have serious optical color unevenness as having a $\Delta E^*$ of 32.4. When the phase retarder was used in the same liquid crystal display as described in Example 17, the display suffered from serious color unevenness such as a rainbow pattern, later exhibiting deteriorated image quality.

COMPARATIVE EXAMPLE 2

A 250 μm thick polyester copolymer film ("PETG 6763") was uniaxially stretched at about 110°C by the use of the same stretching machine as used in Comparative Example 1 to obtain a stretched film having a thickness of about 170 μm (neck-in ratio: about 40%). The resulting phase retarder had an average transmittance of about 89% and an R value of about 535 nm, but was found to have serious optical color unevenness as having a $\Delta E^*$ of 34.5. When the phase retarder was used in the same liquid crystal display as described in Example 12, the display suffered from serious color unevenness such as a rainbow pattern, later exhibiting deteriorated image quality.

## Claims

1. A polymeric film useful as an optical phase retarder, and obtainable by uniaxially stretching a polymeric film or sheet made of a thermoplastic polymer selected from a poly(meth)acrylate resin, polystyrene resin, polyacrylonitrile resin, a polyester resin, a polyamide resin, a polyvinyl chloride resin, a polyvinyl alcohol resin, a polyolefin resin, a polysulfone, a polyether sulfone, a polycarbonate resin, a fluorine-containing resin, and modified resins thereof, thereby obtaining an $\alpha$-value, as defined by equation (1), of 1.00 or more:

$$\alpha = \frac{R_F}{R_D} \qquad (1)$$

wherein $R_F$ represents a retardation value determined using the F-line i.e., 486.1 nm, and $R_D$ represents a retardation value determined by the D-line of sodium, i.e., 589.3 nm,

the thermoplastic polymeric film or sheet having been stretched by transverse uniaxial stretching, compression stretching or longitudinal uniaxial stretching, in such a way that the stretched film has a retardation value measured by a polarizing microscope of from 30 to 1200 nm, provided that when the thermoplastic polymer is a polycarbonate resin, a retardation value of from 200 to 625 nm is excluded, the neck-in ratio is not more than 13%, so that

the stretched film has an optical color difference $\Delta E^*$ of not more than 30 as measured with the stretched film being set between crossed Nicols in such a manner that the optic axis thereof makes an angle of 45° with respect to the axis of polarization of the Nicol, said optical color difference being given in terms of the Cube-Root formula and measured in accordance with the color specification given in JIS-Z-8729.

2. A phase retarder as claimed in Claim 1, wherein said polymer is a polyester resin, a polyvinyl chloride resin or a polyacrylonitrile resin.

3. A polarizing sheet comprising a linear polarizer and a phase retarder as claimed in Claim 1 or 2.

4. A liquid crystal display comprising a liquid crystal cell sandwiched between a pair of polarizing sheets, wherein a phase retarder as claimed in Claim 1 or 2 is provided between the liquid crystal cell and one of the polarizing sheets.

5. A method of preparing an optical phase retarder, comprising uniaxially stretching a thermoplastic polymeric film or sheet which comprises a substance selected from a poly(meth)acrylate resin, polystyrene resin, polyacrylonitrile resin, a polyester resin, a polyamide resin, a polyvinyl chloride resin, a polyvinyl alcohol resin, a polyolefin resin, a fluorine-containing resin, and modified resins thereof, thereby obtaining an $\alpha$-value, as defined by equation (1), of 1.00 or more:

$$\alpha = \frac{R_F}{R_D} \qquad (1)$$

wherein $R_F$ represents a retardation value determined using the F-line i.e., 486.1 nm, and $R_D$ represents a retardation value determined by the D-line of sodium, i.e., 589.3 nm, the thermoplastic polymeric film or sheet being

stretched by transverse uniaxial stretching, compression stretching or longitudinal uniaxial stretching, in such a way that the stretched film has a retardation value measured by a polarizing microscope of from 30 to 1200 nm, provided that when the thermoplastic polymer is a polycarbonate resin, a retardation value of from 200 to 625 nm is excluded, the neck-in ratio is not more than 13%, so that

the stretched film has an optical color difference $\Delta E^*$ of not more than 30 as measured with the stretched film being set between crossed Nicols in such a manner than the optic axis thereof makes an angle of 45° with respect to the axis of polarization of the Nicol, said optical color difference being given in terms of the Cube-Root formula and measured in accordance with the color specification given in JIS-Z-8729.

6. Use of a polymeric film as an optical phase retarder, the polymeric film being as claimed in any of Claims 1 to 4 or made by the method of Claim 5.

**Patentansprüche**

1. Polymerfilm als optischer Phasenverzögerer, der durch einachsige Dehnung eines Polymerfilms oder eines aus thermoplastischem Polymer bestehenden Blattes hergestellt ist, welcher Polymer aus den folgenden Stoffen gewählt wird, Poly(meth)akrylharz, Polystyrenharz, Polyakrylonitrilharz, Polyesterharz, Polyamidharz, Polyvinylchloridharz, Polyvinylalkoholharz, Polyolefinharz, Polysulfon, Polyäthersulfon, Polykarbonatharz, Fluorinenthaltendes Harz, und davon abgewandelte Harze, wodurch ein $\alpha$-Wert von 1.00 oder mehr erreicht wird, der durch die Gleichung (1) definiert ist :

$$\alpha = \frac{R_F}{R_D} \qquad (1)$$

worin $R_F$ einen Verzögerungswert, der mittels der F-Linie,486.1 nm bestimmt wird, und $R_D$ einen Verzögerungswert, der mittels der D-Linie von Natrium, 589.3 nm bestimmt wird, bedeutet, wobei der thermoplastische Film oder das thermoplastische Blatt durch einachsige Querdehnung, Kompressionsdehnung oder einachsige Längsdehnung derart gestreckt wird, dass der gedehnte Film einen mit dem Polarisationsmikroskop gemessenen Verzögerungswert von 30 bis 1200 nm aufweist, vorausgesetzt dass der thermoplastische Polymer ein Polykarbonat ist, ist ein Verzögerungswert von 200 bis 625 nm ausgeschlossen, wobei das Einschnürungsverhältnis nicht mehr als 13% beträgt, so dass der gedehnte Film eine optische Farbdifferenz $\Delta E^*$ von nicht mehr als 30 aufweist, und dies gemessen mit dem gedehnten Film derart zwischen gekreuzte Nicols gesetzt, dass die optische Achse davon einen Winkel von 45° gegenüber der Polarisationsachse des Nicols macht, wobei diese optische Farbdifferenz in Beziehung auf die Cube-Root Formel angegeben ist und gemäss den im JIS-Z-8729 angegebenen Farbbestimmungen gemessen wird.

2. Phasenverzögerer gemäss Anspruch 1, in welchem der Polymer ein Polyesterharz, ein Polyvinylchloridharz oder ein Polyakrylonitrilharz ist.

3. Polarisierendes Blatt mit einer Linearpolarisierungseinrichtung und einem Phasenverzögerer gemäss Anspruch 1 oder 2.

9

**4.** Flüssigkristallanzeige mit einer Flüssigkristallzelle, welche zwischen zwei polarisierende Blätter eingebettet ist, worin ein Phasenverzögerer gemäss Anspruch 1 oder 2 zwischen der Flüssigkristallzelle und einem der polarisierenden Blätter vorgesehen ist.

**5.** Verfahren zur Herstellung eines optischen Phasenverzögerers, welches Verfahren eine einachsige Dehnung eines thermoplastischen Polymerfilms oder Blattes umfasst, der oder die einen aus den folgendes Substanzen gewählten Stoff aufweist, poly(meth)akrylharz, Polystyrenharz, Polyakrylonitrilharz, Polyesterharz, Polyamidharz, Polyvinylchloridharz, Polyvinylalkoholharz, Polyolefinharz, Polysulfon, Polyäthersulfon, Polykarbonatharz, Fluorinenthaltendes Harz, und davon abgewandelte Harze, wodurch ein $\alpha$-Wert von 1.00 oder mehr erreicht wird, der durch die Gleichung (1) definiert ist :

$$\alpha \;=\; \frac{R_F}{R_D} \qquad\qquad (1)$$

worin $R_F$ einen Verzögerungswert, der mittels der F-Linie,486.1 nm bestimmt wird, und $R_D$ einen Verzögerungswert, der mittels der D-Linie von Natrium, 589.3 nm bestimmt wird, bedeutet, wobei der thermoplastische Film oder das thermoplastische Blatt durch einachsige Querdehnung, Kompressionsdehnung oder einachsige Längsdehnung derart gestreckt wird, dass der gedehnte Film einen mit dem Polarisationsmikroskop gemessenen Verzögerungswert von 30 bis 1200 nm aufweist, vorausgesetzt dass der thermoplastische Polymer ein Polykarbonat ist, ist ein Verzögerungswert von 200 bis 625 nm ausgeschlossen, wobei das Einschnürungsverhältnis nicht mehr als 13% beträgt, so dass der gedehnte Film eine optische Farbdifferenz $\Delta E^*$ von nicht mehr als 30 aufweist, und dies gemessen mit dem gedehnten Film derart zwischen gekreuzte Nicols gesetzt, dass die optische Achse davon einen Winkel von 45° gegenüber der Polarisationsachse des Nicols macht, wobei diese optische Farbdifferenz in Beziehung auf die Cube-Root Formel angegeben ist und gemäss den im JIS-Z-3729 angegebenen Farbbestimmungen gemessen wird.

**6.** Gebrauch eines Polymerfilms als optischen Phasenverzögerer, wobei der Polymerfilm gemäss einem der Ansprüche 1 bis 4 beschaffen ist oder nach dem Verfahren gemäss Anspruchs 5 hergestellt wird.

**Revendications**

**1.** Film polymère utilisable comme rétardateur de phase optique, et pouvant être obtenu par un étirage uniaxial d'un film ou feuille polymère réalisée en polymère thermoplastique choisie parmi une résine poly (meth)acrylate, une résine polystyrène, une résine polyacrylonitrile, une résine polyester, une résine polyamide, une résine de chlorure de polyvinyl, une résine d'un alcool polyvinyle, une résine polyoléfine, un polysulfone, un polyester sulfone, une résine polycarbonate, une résine contenant de la fluorine et les résines modifiées de celles-ci, obtenant ainsi une valeur $\alpha$ telle que définie par l'équation (1), de 1.00 ou plus :

$$\alpha \;=\; \frac{R_F}{R_D} \qquad\qquad (1)$$

où $R_F$ représente une valeur de retard déterminée utilisant la ligne-F soit, 486.1 nm, et $R_D$ représente une valeur de retard déterminée par la ligne -D du sodium, soit, 589.3 nm, la feuille ou film thermoplastique ayant été étirée transversalement uniaxialement, étirée par compression ou étirée longitudinalement uniaxialement, de telle façon que le film présente une valeur retard mesurée par un microscope à polarisation de 30 à 1200 nm, pour autant que lorsque le polymère thermoplastique est une résine polycarbonate, une valeur retard de 200 à 625 nm soit exclue, le taux de striction étant inférieur à 13% de sorte que le film étiré présente une différence de couleur optique $\Delta E^*$ inférieure à 30 mesurée lorsque le film étiré est placé entre des Nicols croisés de manière à ce que son axe optique forme un angle de 45° par rapport à l'axe de polarisation du Nicol, cette différence de couleur optique étant donnée en termes de formule de racine cubique et mesurée selon les spécifications de couleur données dans JIS-Z-8729.

2. Un retardateur de phase selon la revendication 1, dans lequel ce polymère est une résine polyester, une résine de chlorure de polyvinyle ou une résine polyacrylonitrile.

3. Une feuille polarisante comprenant un polariseur linéaire et un retardateur de phase tel que revendiqué dans les revendications 1 ou 2.

4. Un affichage à cristaux liquides, comprenant une cellule à cristaux liquides prise en sandwich entre une paire de feuilles polarisantes, dans lequel un retardateur de phase tel que revendiqué dans la revendication 1 ou la revendication 2 est prévu entre la cellule à cristaux liquides et l'une des feuilles polarisantes.

5. Un procédé pour la préparation d'un retardateur optique comprenant l'étirage uniaxial d'un film ou feuille d'un polymère thermoplastique comprenant une substance sélectionnée parmi une résine poly (meth)acrylate, une résine polystyrène, une résine polyacrylonitrile, une résine polyester, une résine polyamide, une résine de chlorure de polyvinyl, une résine d'un alcool polyvinyle, une résine polyoléfine, un polysulfone, un polyester sulfone, une résine polycarbonate, une résine contenant de la fluorine et les résines modifiées de celles-ci, obtenant ainsi une valeur a telle que définie par l'équation (1), de 1.00 ou plus :

$$\alpha = \frac{R_F}{R_D} \qquad (1)$$

où $R_F$ représente une valeur de retard déterminée utilisant la ligne-F soit, 486.1 nm, et $R_D$ représente une valeur de retard déterminée par la ligne -D du sodium, soit, 589.3 nm, la feuille ou film thermoplastique ayant été étirée transversalement uniaxialement, étirée par compression ou étirée longitudinalement uniaxialement, de telle façon que le film présente une valeur retard mesurée par un microscope à polarisation de 30 à 1200 nm, pour autant que lorsque le polymère thermoplastique est une résine polycarbonate, une valeur retard de 200 à 625 nm soit exclue, le taux de striction étant inférieur à 13% de sorte que le film étiré présente une différence de couleur optique $\Delta E^*$ inférieure à 30 mesurée lorsque le film étiré est placé entre des Nicols croisés de manière à ce que son axe optique forme un angle de 45° par rapport à l'axe de polarisation du Nicol, cette différence de couleur optique étant donnée en termes de formule de racine cubique et mesurée selon les spécifications de couleur données dans JIS-Z-3729.

6. Utilisation d'un film polymérisé comme retardateur de phase, le film polymère étant tel que revendiqué dans l'une des revendications 1 à 4 ou réalisé selon le procédé de la revendication 5.

T (%)

40

20

0

400 500 600 700

λ (nm)

FIG. 1

T (%)

40

20

0

400 500 600 700

λ (nm)

FIG. 2

T (%)

40

20

0

400 500 600 700

λ (nm)

FIG. 3